# FASCICULE DE BREVET EUROPEEN

(11) **EP 2 035 307 B1**
(45) Date de publication et mention de la délivrance du brevet: **02.01.2013**
(21) Numéro de dépôt: 06764614.1
(22) Date de dépôt: 12.05.2006
(51) Int. Cl.: B65G 65/44

(54) **PLANCHER VIBRANT MODULAIRE**
MODULARER VIBRATIONSBODEN
MODULAR VIBRATORY FLOOR

(43) Date de publication de la demande: 18.03.2009
(73) Titulaire: Poncet, Jean-Claude, 71240 Sennecey-le-Grand (FR)
(72) Inventeur: Poncet, Jean-Claude, 71240 Sennecey-le-Grand (FR)
(74) Mandataire: Dennemeyer & Associates S.A.
(86) Numéro de dépôt international: PCT/FR2006/001071
(87) Numéro de publication internationale: WO 2007/132072

(56) Documents cités:
- BE-A- 515 588
- DE-C- 826 266
- FR-A- 2 641 565
- FR-A- 2 878 239
- US-A- 3 123 203
- US-A- 3 199 664
- US-A- 4 907 721

## Description

La présente invention est relative à un système universel de vidange de produits grenus et pulvérulents par plancher vibrant modulaire.

La technique du plancher vibrant utilisée pour la vidange des talus résiduels dans les silos et navires consiste en des tôles vibrantes supportées sur des ressorts, jointes bout à bout pour constituer des travées, installées sur des pentes inclinées en direction d'ouvertures de reprise. Chaque travée est maintenue en place par des ancrages placés en partie haute de la tôle supérieure. Un tel plancher est divulgué dans le document US 4 907 721. L'étanchéité du système est assurée par une membrane, dont une extrémité est fixée à la périphérie de chaque travée, et l'autre extrémité maintenue au sol par des feuillures métalliques. Chaque tôle vibrante est raidie transversalement par un raidisseur fixé sous la tôle, et logé dans une réservation prévue à cet effet dans la pente. Cette technique présente de graves inconvénients de mise en oeuvre et de fonctionnement. En effet, les tôles vibrantes étant solidarisées bout à bout pour constituer des travées, l'installation doit se faire obligatoirement *in situ*, entraînant de longues périodes d'immobilisation des silos et navires empêchant leur exploitation. L'installation *in situ* s'effectue au niveau du sol, dans des conditions de travail à forte pénibilité, créant par là-même des difficultés de contrôle de qualité du montage. D'autre part, chaque ressort nécessite de percer un trou dans le béton de pente, ce qui entraîne un nombre considérable d'opérations de perçage. De plus, la présence des raidisseurs oblige à prévoir des réservations lors de la construction des pentes, le plus souvent réalisées par bétonnage, lesquelles réservations compliquent la mise en oeuvre du bétonnage, et peuvent ne pas coïncider avec la position finale des raidisseurs. En outre, compte-tenu des inévitables défauts de planéité des fondations sur lesquelles les planchers vibrants sont installés, il est très difficile de garantir une étanchéité suffisante pour empêcher toute pénétration de poussière sous les tôles, susceptible de perturber le fonctionnement du système. Par ailleurs, la mise en contact direct des tôles vibrantes avec la fondation peut créer un phénomène de paroi froide entre les tôles et la couche de produit en contact avec elles, et générer une humidité propre à dégrader le produit stocké et accélérer la corrosion des tôles. Quant aux ancrages mis en place en partie supérieure des travées pour les empêcher de glisser, ils constituent des liaisons entre les parties vibrantes et la pente support, liaisons susceptibles de transmettre des vibrations à l'ensemble de la structure et y causer des désordres. Ce sont de plus des pièces d'usure nécessitant un entretien, et des points privilégiés de pénétrations de poussière. Enfin, l'utilisation de tôles planes donne lieu à l'apparition de modes vibratoires transversaux parasites, peu propices à l'écoulement recherché du produit à vidanger.

La présente invention concerne un plancher vibrant qui pallie les désavantages des solutions antérieures, en permettant notamment la préfabrication de planchers vibrants sous la forme de modules vibrants indépendants, prémontés sur des cadres. De ce fait, il n'est plus nécessaire de prévoir de réservations dans les pentes, les raidisseurs trouvant place à l'intérieur des cadres.

Selon une caractéristique particulière de l'invention, la tôle de chaque module vibrant n'est maintenue en place que par sa membrane d'étanchéité périphérique, ce qui supprime la nécessité des ancrages, et élimine toute transmission de vibrations à la structure environnante.

Dans un mode de réalisation préféré de l'invention, mais qui en soi n'est pas exclusif de cette dernière, la membrane d'étanchéité présente d'un côté une forme rainurée qui vient se coller sur le bord de la tôle, et de l'autre un bourrelet qui est maintenu sur le bord du cadre par des feuillures métalliques.

Selon une autre caractéristique de l'invention, un matériau de support pouvant être un isolant thermique est incorporé dans les cadres, réduisant ainsi le phénomène de paroi froide entre la tôle et le produit stocké, et permettant aisément la mise en place et le maintien des ressorts.

Selon une autre caractéristique complémentaire de l'invention, le matériau de support présente des nervures ou bosselages en partie supérieure, sur lesquelles la tôle va se déformer par emboutissage sous la charge du produit stocké, afin de constituer des ondes transversales.

D'autres caractéristiques d'un plancher vibrant modulaire, établi conformément à l'invention, apparaîtront encore à travers la description qui suit d'exemples de réalisation, donnés à titre indicatif et non limitatif, en référence aux dessins annexés sur lesquels:
- la figure 1 est une vue schématique en plan du plancher vibrant modulaire considéré
- la figure 2 est une coupe transversale selon la ligne I-I de la figure 1
- la figure 3 est une coupe longitudinale selon la ligne II-II de la figure 1
- la figure 4 est une vue en perspective d'un module vibrant
- la figure 5 est une coupe transversale selon la ligne III-III de la figure 4 du module vibrant non chargé
- la figure 6 est une coupe longitudinale selon la ligne IV-IV de la figure 4 du module vibrant non chargé
- la figure 7 est une vue à plus grande échelle illustrant divers détails de la figure 6
- la figure 8 est une vue à plus grande échelle illustrant divers détails de la figure 7
- la figure 9 est une autre coupe longitudinale selon la ligne IV-IV de la figure 4 du module vibrant non chargé
- la figure 10 est une coupe longitudinale selon la ligne IV-IV de la figure 4 du module vibrant sous charge
- la figure 11 est encore une autre coupe longitudinale selon la ligne IV-IV de la figure 4 du module vibrant non chargé
- la figure 12 est une vue en plan d'un plancher vibrant modulaire dans un wagon de chemin de fer
- la figure 13 est une coupe transversale selon la ligne V-V de la figure 12
- la figure 14 est une autre coupe transversale selon la ligne V-V de la figure 12
- la figure 15 est encore une autre coupe transversale selon la ligne V-V de la figure 12
- la figure 16 est une vue en plan d'un plancher vibrant modulaire dans un navire auto-nettoyant
- la figure 17 est une coupe transversale selon la ligne VI-VI de la figure 16 d'un navire neuf
- la figure 18 est une coupe transversale selon la ligne VI-VI de la figure 16 d'un navire transformé

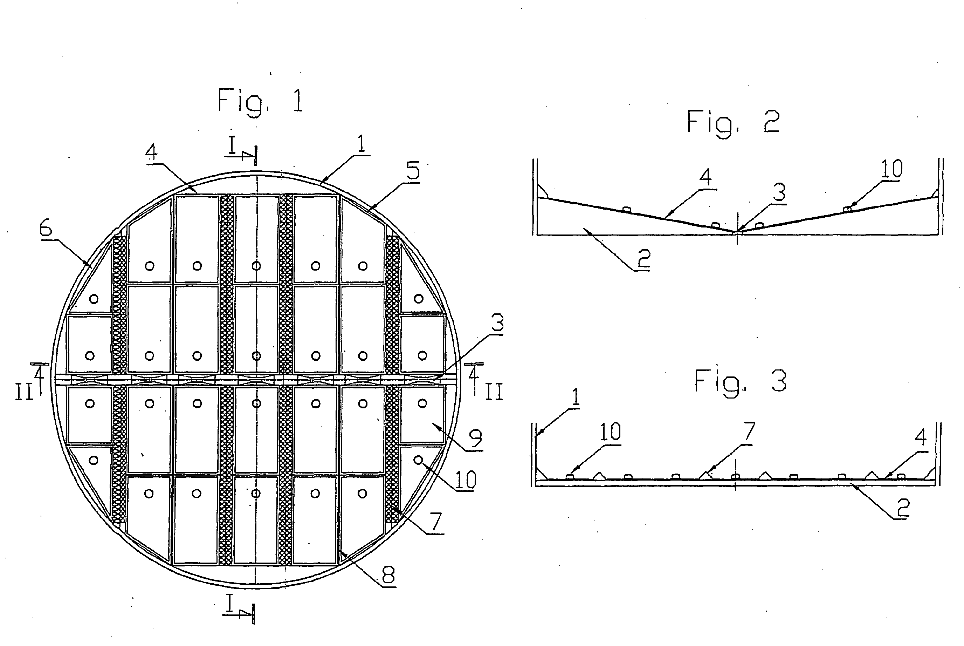

Dans l'exemple de réalisation représenté sur la figure 1, la structure de stockage comporte une paroi 1 et des pentes 2, réalisées de part et d'autre d'un canal de vidange 3. Sur les pentes reposent transversalement des modules vibrants 4 de forme rectangulaire, des modules 5 de forme trapézoïdale ou des modules 6 de forme triangulaire.

Avantageusement, des gaines de ventilation 7, nécessaires à la ventilation de certains produits stockés, peuvent être interposées entre les modules vibrants. Alternativement, un chemin de câble 8 peut être disposé entre les modules, ou ceux-là peuvent être directement juxtaposés.

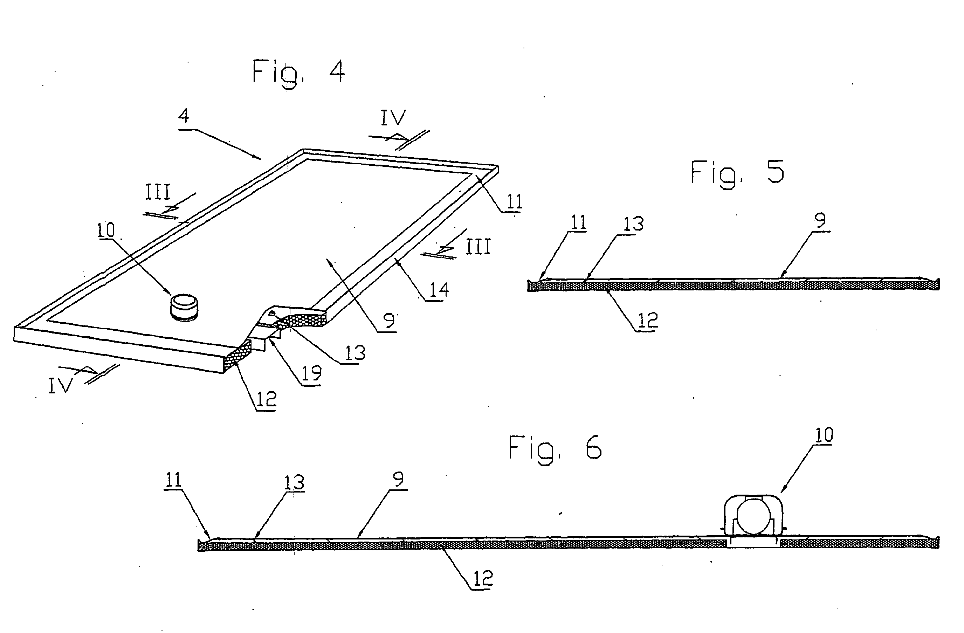

Comme on le voit sur la figure 4 d'une vue en perspective, et les sections des figures 5 et 6, un module vibrant comporte une tôle 9, un organe vibrant 10, une membrane d'étanchéité 11, un matériau de support 12, des ressorts de compression 13, prémontés sur un cadre 14, et ce quelle que soit la forme du module.

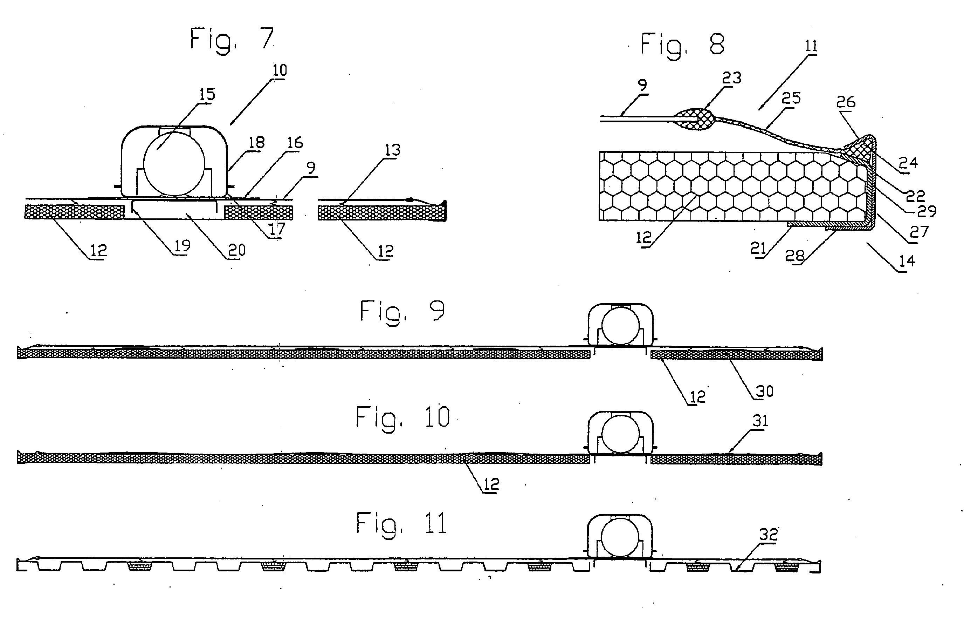

En se référant plus particulièrement au détail de la figure 7, on voit que sur la tôle 9, l'organe vibrant 10 comporte un vibrateur 15 de type électrique ou autre, reposant sur une contre-plaque 16, une plaque d'appui 17 à rebord sur laquelle est fixé par boulonnage ou tout autre moyen analogue un capot 18. Un raidisseur 19 disposé transversalement sous la tôle 9 dans un espace 20 ménagé dans le matériau de support, est boulonné au vibrateur 15 à travers la tôle 9, la contre-plaque 16 et la plaque d'appui 17. Alternativement, le vibrateur 15 peut être disposé en-dessous de la tôle 9, auquel cas le boulonnage enserre le vibrateur 15, le raidisseur 19, la tôle 9 et la contre-plaque 16.

Selon l'invention, le cadre 14 est composé de cornières 21 dont l'aile verticale présente en partie supérieure une partie inclinée 22, assemblées à leurs extrémités par soudage ou tout autre moyen, sur l'aile horizontale desquelles repose le matériau de support 12, constitué lui-même d'une matière de faible poids de type polystyrène extrudé, mousse de polyuréthane, mousse d'aluminium, structure en matière plastique à nid d'abeille ou autre, bois ajouré ou toute autre matière apte à supporter sans se déformer les forces de compression induites par le produit stocké.

Selon une autre caractéristique de l'invention, le profil de la membrane d'étanchéité 11 représenté à plus grande échelle sur le détail de la figure 8, comporte à une extrémité une forme rainurée 23 emboîtée de façon continue sur le rebord de la tôle 9 et maintenue par collage, soudage, vulcanisation, vissage, rivetage ou tout autre moyen. Le profil de la membrane 11 présente à son autre extrémité un bourrelet 24, et entre la partie rainurée 23 et le bourrelet 24 une partie souple 25. Les parties 23, 24 et 25 du profil de la membrane 11 peuvent être faites de la même matière par moulage, coulage, extrusion ou soudage, ou de matières différentes collées ou soudées entre elles ou obtenues par bi-extrusion ou multi-extrusion.

Dans un mode de réalisation préféré de l'invention, mais qui en soi n'est pas exclusif de cette dernière, le bourrelet 24 de forme triangulaire, est maintenu en place par coincement entre la partie inclinée 22 de la cornière 21 et la partie supérieure 26 formant un angle rentrant d'une feuillure métallique 27 présentant une aile horizontale inférieure 28 enveloppant l'aile horizontale de la cornière 21 du cadre 14. La partie verticale 29 de la feuillure 27 est fixée sur la partie verticale de la cornière 21 par vissage, rivetage ou tout autre moyen.

Comme indiqué sur la figure 9, le matériau de support 12 peut comporter sur sa face supérieure et à des intervalles prédéterminés des nervures transversales 30 de section légèrement bombée, de telle sorte qu'après les premiers remplissages de l'unité de stockage et sous le poids du produit stocké, la tôle 9 soit déformée sur les nervures 30 pour présenter des ondes transversales 31 comme indiqué sur la figure 10, ondes propres à éliminer les modes vibratoires parasites transversaux.

Selon un autre mode de réalisation de l'invention représenté en figure 11, le matériau de support 12 peut être une tôle métallique nervurée ou une feuille plastique nervurée, de type bardage, coffrage collaborant, revêtu ou non, présentant des ondes transversales 32 rondes ou prismatiques.

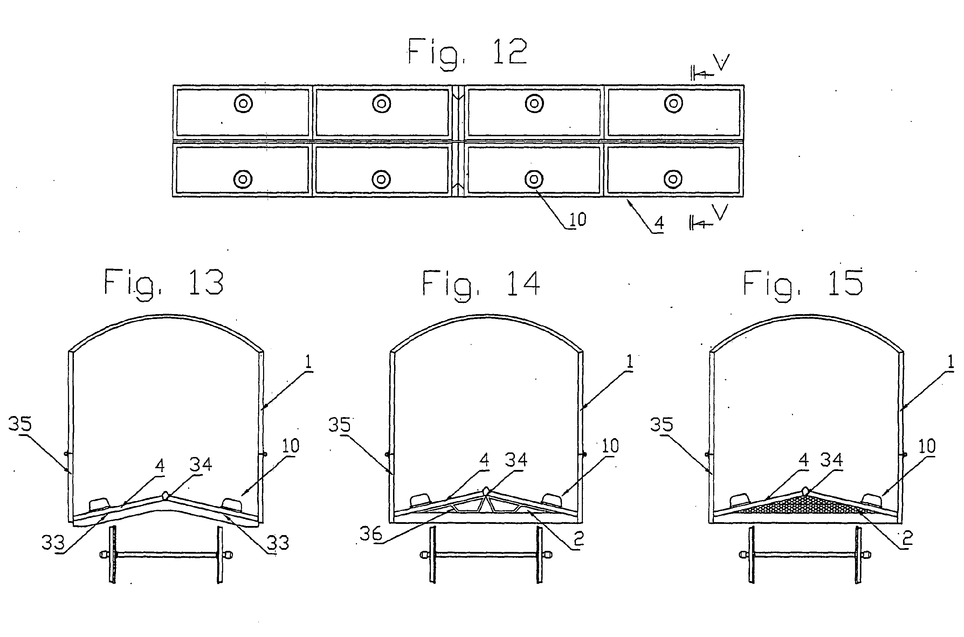

Dans un autre exemple de réalisation représenté sur les figures 12, 13, 14 et 15, les parois 1 sont celles d'un wagon de chemin de fer destiné au transport de produits vrac, les pentes 2 étant constituées de 2 pans inclinés 33 dont la crête 34 se trouve dans l'axe longitudinal du wagon, les pans inclinés 33 étant formés à la construction du wagon. Les modules 4 sont disposés sur les pans inclinés 33, et la mise en route des unités vibrantes 10 provoque l'évacuation du contenu vers des portes latérales 35. Alternativement, pour rapporter des modules vibrants 4 dans un wagon existant, les pentes 2 peuvent être réalisées en charpente métallique 36 ou dans les matériaux de support cités précédemment.

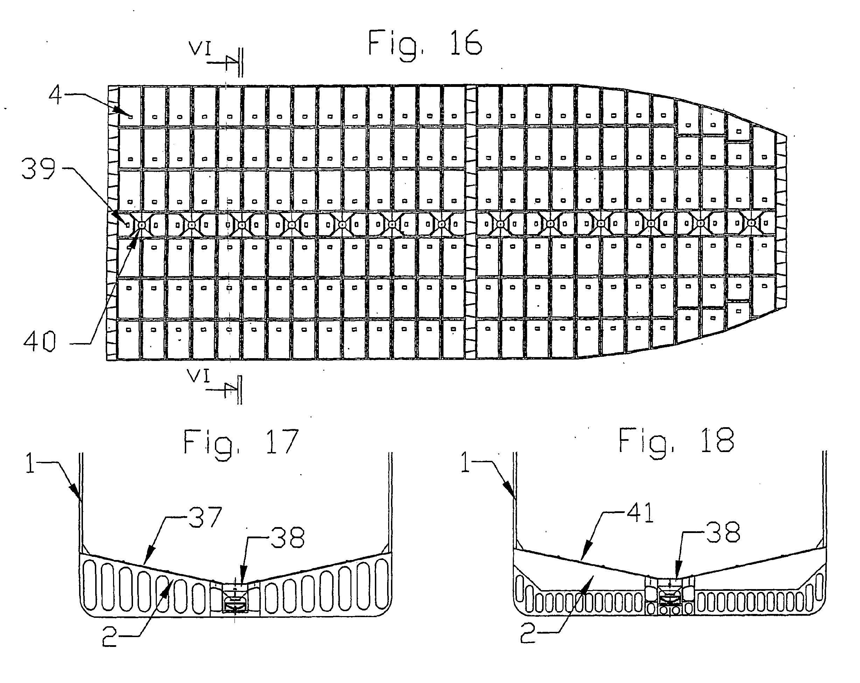

Dans encore un autre exemple de réalisation représenté sur les figure 16 et 17, les parois 1 sont celles d'un navire auto-nettoyant de transport de produits vrac, les pentes 2 étant constituées par des pans de ballast inclinés 37 intégrés lors de la construction du navire, sur lesquels reposent des modules transversaux 4. Des pans secondaires 38 supportent des modules longitudinaux 39, permettant de réduire le nombre des ouvertures d'évacuation 40.

Dans l'exemple de transformation d'un navire existant représenté sur la figure 18, les pentes 2 sont constituées d'un double fond 41 ajouté à la structure du navire.

Il va de soi que des modules vibrants pré-assemblés sur cadre peuvent trouver place dans toute structure contenant des produits vrac, qu'il s'agisse de navires, silos de stockage de toutes sortes, aires de stockage à ciel ouvert, camions, bennes, containers ou trémies, sans sortir du cadre de la présente invention. On introduit ainsi dans ces structures, en réduisant considérablement le temps de montage et d'immobilisation, un système efficace de vidange automatique, qui ne transmet aucune vibration à la structure elle-même, ne comporte aucune pièce d'usure, et aide au maintien de la qualité des produits stockés.

## Revendications

1. Plancher vibrant modulaire pour structure de stockage à parois (1) supporté sur des pans inclinés (33), composé d'un ou de plusieurs modules vibrants (4), **caractérisé en ce que** chaque module (4) constitue une unité indépendante pré-assemblée sur un cadre (14), garni d'un matériau de support (12) sur lequel repose une tôle métallique (9) fixée à un organe vibrant (10) et à un raidisseur transversal (19), le raidisseur (19) étant logé à l'intérieur d'un espace vide (20) ménagé dans le matériau de support (12).

2. Plancher vibrant modulaire selon la revendication 1, **caractérisé en ce que** le matériau de support (12) est une tôle de bardage métallique ou plastique à ondes transversales (32), rondes, en oméga ou prismatiques.

3. Plancher vibrant modulaire selon la revendication (1), **caractérisé en ce que** le matériau de support (12) est un isolant thermique constitué de matière allégée par inclusion d'air ou de gaz.

4. Plancher vibrant modulaire selon la revendication (1), **caractérisé en ce que** le matériau de support (12) est un composé de matière plastique à structure alvéolaire de type "nid d'abeille".

5. Plancher vibrant modulaire selon la revendication (1), **caractérisé en ce que** le matériau support (12) est un assemblage de profilés en matière plastique.

6. Plancher vibrant modulaire selon la revendication (1) **caractérisé en ce que** le matériau support (12) est un composé de fibres ligneuses.

7. Plancher vibrant modulaire selon l'une quelconque des revendications 2 à 6, **caractérisé en ce que** le matériau de support (12) comporte en partie supérieure des nervures transversales (30) à écartement prédéfini, sur lesquels se forment des ondes transversales (31) dans la tôle (9) par déformation de la tôle sous le poids du produit stocké lors des premiers chargements.

8. Plancher vibrant modulaire selon l'une quelconque des revendications 1 à 7, **caractérisé en ce que** des ressorts de compression (13) sont interposés entre la tôle (9) et le matériau de support (12), et fixés dans le matériau de support (12).

9. Plancher vibrant modulaire selon l'une quelconque des revendications 1 à 8, **caractérisé en ce que** la tôle (9) n'est maintenue en place sur le cadre (14) que par liaison avec une membrane d'étanchéité périphérique souple (11) fixée sur le pourtour du cadre, et que par appui éventuel sur des ressorts de compression (13), les tôles de différents modules ne présentant en outre aucune liaison entre elles.

10. Plancher vibrant modulaire selon la revendication 9, **caractérisé en ce que** le profil de la membrane d'étanchéité (11) présente à une extrémité une forme rainurée (23) emboîtée et collée sur le pourtour de la tôle (9), et à l'autre extrémité un bourrelet (24) maintenu par des feuillures (27) et les cornière (21) du cadre (14).

11. Plancher vibrant modulaire selon l'une quelconque des revendications 1 à 10, **caractérisé en ce que** les parois extérieures (1) sont celles d'un navire, les pans inclinés (33) étant le plancher de ballast (37) du navire.

12. Plancher vibrant modulaire selon la revendication 11, **caractérisé en ce que** les pans inclinés (33) constituent un double fond (41) rapporté à la structure du navire.

13. Plancher vibrant modulaire selon l'une quelconque des revendications 1 à 12, **caractérisé en ce que** des modules longitudinaux (39) permettent de réduire le nombre des ouvertures d'évacuation (40).

14. Plancher vibrant modulaire selon l'une quelconque des revendications 1 à 10, **caractérisé en ce que** les parois extérieures (1) sont celles d'un wagon de chemin de fer, les pans inclinés (33) se rejoignant à leur sommet (34) dans l'axe longitudinal du wagon.

## Claims

1. A modular vibratory floor for a walled storage structure (1) supported on tilted faces (33), consisting of one or more vibratory modules (4), **characterized in that** each module (4) forms a preassembled independent unit on a frame (14), fitted out with a supporting material (12) on which a metal sheet (9) attached to a vibratory member (10) and to a transverse stiffener (19) rests, the stiffener (19) being housed inside an empty space (20) made in the supporting material (12).

2. The modular vibratory floor according to claim 1, **characterized in that** the supporting material (12) is a metal or plastic siding sheet with transverse, round, omega-shaped or prismatic waves (32).

3. The modular vibratory floor according to claim 1, **characterized in that** the supporting material (12) is a heat insulator consisting of material lightened by inclusion of air or gas.

4. The modular vibratory floor according to claim 1, **characterized in that** the supporting material (12) is a plastic material compound with a cellular structure of the honeycomb type.

5. The modular vibratory floor according to claim 1, **characterized in that** the supporting material (12) is an assembly of plastic profiles.

6. The modular vibratory floor according to claim 1, **characterized in that** the supporting material (12) is a ligneous fiber composite.

7. The modular vibratory floor according to any one of claims 2 to 6, **characterized in that** the supporting material (12) includes in an upper portion transverse ribs (30) with a predefined gap, on which transverse waves (31) are formed in the metal sheet (9) by deformation of the metal sheet under the weight of the stored product during the first loading operations.

8. The modular vibratory floor according to any one of claims 1 to 7, **characterized in that** compression springs (13) are interposed between the metal sheet (9) and the supporting material (12) and attached in the supporting material (12).

9. The modular vibratory floor according to any one of claims 1 to 8, **characterized in that** the metal sheet (9) is held in place on the frame (14) only by a connection with a flexible peripheral sealing membrane (11) attached on the perimeter of the frame, and only by bearing upon compression springs (13), the metal sheets of different modules further not having any connection between them.

10. The modular vibratory floor according to claim 9, **characterized in that** the profile of the sealing membrane (11) has at one end, a grooved shape (23) fitted and adhered onto the perimeter of the metal sheet (9) and at the other end, a bulge (24) held by rabbets (27) and the corner irons (21) of the frame (14).

11. The modular vibratory floor according to any one of claims 1 to 10, **characterized in that** the outer walls (1) are those of a ship, the tilted faces (33) being the ballast floor (37) of the ship.

12. The modular vibratory floor according to claim 11, **characterized in that** the tilted faces (33) form a double bottom (41) added to the structure of the ship.

13. The modular vibratory floor according to any one of claims 1 to 12, **characterized in that** longitudinal modules (39) allow the number of discharge apertures (40) to be reduced.

14. The modular vibratory floor according to any one of claims 1 to 10, **characterized in that** the outer walls (1) are those of a railroad car, the tilted faces (33) joining together at their top (34) in the longitudinal axis of the car.

## Patentansprüche

1. Modularer Rüttelboden für Lagerstroktur mit Wänden (1) auf geneigten Schrägen (33), der sich aus einem oder mehreren Rüttelmodulen (4) zusammensetzt, **dadurch gekennzeichnet, dass** jedes Modul (4) eine unabhängige, auf einem Rahmen (14) vormontierte Einheit darstellt, das mit einem Stützmaterial (12) ausgestattet ist, auf dem ein Metallblech (9) ruht, das an einem Rüttelorgan (10) und an einer Querverstärkung (19) befestigt ist, wobei die Verstärkung (19) in einem leeren Raum (20) untergebracht ist, der in das Stützmaterial (12) eingearbeitet ist.

2. Modularer Rüttelboden nach Anspruch 1, **dadurch gekennzeichnet, dass** das Stützmaterial (12) eine Verkleidungsplatte aus Metall oder Kunststoff mit transversalen, runden, omegaförmigen oder prismatischen Wellen (32) ist.

3. Modularer Rüttelboden nach Anspruch (1), **dadurch gekennzeichnet, dass** das Stützmaterial (12) ein thermischer Isolationsstoff ist, der aus durch Luft- oder Gaseinschluss gewichtsreduziertem Material besteht,

4. Modularer Rüttelboden nach Anspruch (1), **dadurch gekennzeichnet, dass** das Stützmaterial (12) eine Kunststoffverbindung mit einer waffelartigen Struktur vom Bienenvaabentyp ist,

5. Modularer Rüttelboden nach Anspruch (1), **dadurch gekennzeichnet, dass** das Stützmaterial (12) eine Kunststoffprofilmontage ist.

6. Modularer Rüttelboden nach Anspruch (1), **dadurch gekennzeichnet, dass** das Stützmaterial (12) eine Holzfaserverbindung ist.

7. Modularer Rüttelboden nach einem der Ansprüche 2 bis 6, **dadurch gekennzeichnet, dass** das Stützmaterial (12) im oberen Teil transversale Rippen (30) mit vorbestimmtem Abstand aufweist, auf denen sich durch Verformung der Platte unter dem Gewicht des gelagerten Produkts bei ersten Beladungen transversale Wellen (31) in der Platte (9) ausbilden.

8. Modularer Rüttelboden nach einem der Ansprüche 1 bis 7, **dadurch gekennzeichnet, dass** zwischen dem Blech (9) und dem Stützmaterial (12) Kompressionsschrauben (13) zwischengestellt und im Stützmaterial (12) befestigt sind,

9. Modularer Rüttelboden nach einem der Ansprüche 1 bis 8, **dadurch gekennzeichnet, dass** die Platte (9) auf dem Rahmen (14) nur durch Verbindung mit einer elastischen peripheren Dichtungsmembran (11) am Platz gehalten wird, die auf dem Umfang des Rahmens befestigt ist, und nur durch eventuelle Abstützung auf Kompressionsfedern (13), wobei die Platten verschiedener Module keine weitere Verbindung untereinander aufweisen.

10. Modularer Rüttelboden nach Anspruch 9, **dadurch gekennzeichnet, dass** das Profil der Dichtungsmembran (11) an einem Ende eine gerillte Form (23), die auf dem Umfang der Platte (9) rastet und klebt, und am anderen Ende eine Wulst (24), die von Falzen (27) und den Winkeln (21) des Rahmens (14) gehalten wird, aufweist.

11. Modularer Rüttelboden nach einem der Ansprüche 1 bis 10, **dadurch gekennzeichnet, dass** die Außenwände (1) die eines Schiffs sind, wobei die geneigten Schrägen (33) der Ballastboden (37) des Schiffs sind.

12. Modularer Rüttelboden nach Anspruch 11, **dadurch gekennzeichnet, dass** die geneigten Schrägen (33) einen doppelten Boden (41) darstellen, der auf der Struktur des Schiffs aufgebracht ist.

13. Modularer Rüttelboden nach einem der Ansprüche 1 bis 12, **dadurch gekennzeichnet, dass** Längsmodule (39) erlauben, die Anzahl der Entleerungsöffnungen (40) zu reduzieren.

14. Modularer Rüttelboden nach einem der Ansprüche 1 bis 10, **dadurch gekennzeichnet, dass** die Außenwände (1) die eines Eisenbahnwaggons sind, wobei sich die geneigten Schrägen (33) an ihrer Spitze (34) in der Längsachse des Waggons treffen.
